(19) Europäisches Patentamt / European Patent Office / Office européen des brevets

(11) **EP 4 113 077 A1**

(12) **EUROPEAN PATENT APPLICATION**

(43) Date of publication:
**04.01.2023 Bulletin 2023/01**

(21) Application number: **21182947.8**

(22) Date of filing: **30.06.2021**

(51) International Patent Classification (IPC):
**G01J 1/04** $^{(2006.01)}$   **G01J 1/42** $^{(2006.01)}$
**G01M 11/02** $^{(2006.01)}$

(52) Cooperative Patent Classification (CPC):
**G01J 1/4228; G01J 1/0403;** G01J 2001/4247

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Marelli Automotive Lighting Italy S.p.A.
Con Socio
Unico
10078 Venaria Reale (TO) (IT)**

(72) Inventors:
• **PARONI, Sara**
  **33028 Tolmezzo (UD) (IT)**
• **SVETTINI, Marco**
  **33028 Tolmezzo (UD) (IT)**
• **CANDOTTI, Pierluigi**
  **33028 Tolmezzo (UD) (IT)**

(74) Representative: **Zamprogno, Bruno et al
STUDIO TORTA S.p.A.
Via Viotti, 9
10121 Torino (IT)**

(54) **SYSTEM AND METHOD FOR THE PHOTOMETRIC CONTROL OF AN EMITTING SURFACE OF AN AUTOMOTIVE LIGHTING UNIT**

(57)    A system (1) for the photometric control of an emitting surface (7) of an automotive lighting unit (2). The system comprises an image acquisition device (8), and an electronic unit (10) configured so as to: selectively capture, by means of the image acquisition device (8), a plurality of digital image cells (ICi) comprising respective pixels ($P_{jk}(i)$), determine the overall image (IT) on the basis of the captured digital cells (ICi), and determine whether the emitting surface (7) has a homogeneous luminance or a non-homogeneous luminance on the basis of the luminances of the pixels ($L(P_{jk}(i))$) of the overall image (IT).

FIG. 1

EP 4 113 077 A1

## Description

TECHNICAL FIELD

The present invention relates to a system and a method for the photometric control of an emitting surface of an automotive lighting unit. More in detail, the present invention concerns the determination and control of the luminance homogeneity of the emitting surface of an automotive lighting unit.

BACKGROUND ART

As is known, in the production processes of automotive lights for motor-vehicles, hereinafter referred to as automotive lighting units, the photometric control of the luminance of the emitting surface of the automotive lighting unit is provided.

To date, this operation is carried out on a sample basis using laboratory tools, or by direct observation of the automotive light turned on by an operator in charge to control therof.

Both of the above-mentioned photometric control modes are affected by technical problems. The sample control with laboratory instruments is subject to the exclusion from the verification of a substantial number of automotive lights, i.e., it is exposed to the possibility of not identifying non-sampled lights, which have luminances that do not comply with the specifications required by vehicle manufacturers, with all the drawbacks that this entails.

The direct control performed by the operator may instead be subject to incorrect analysis, as it essentially depends on the outcome of a subjective assessment that is directly related to the knowledge and ability to observe the automotive lighting unit by the operator.

DESCRIPTION OF THE INVENTION

The object of the present invention is therefore to provide a system and a method for the photometric control of an emitting surface of an automotive light, which overcomes the technical drawbacks described above.

This object is achieved by the present invention as it relates to a system for the photometric control of an emitting surface of an automotive light, wherein the system comprises: an image acquisition device, an electronic unit configured so as to: capture selectively, by means of said image acquisition device, a plurality of digital image cells comprising respective pixels, wherein said captured digital cells are dimensioned so that the pixels contained therein have an acquisition angle smaller than a predetermined measured angular threshold relative to a viewing axis of said image acquisition device, and wherein said digital cells are dimensioned so that their composition/union forms an overall image which represents said emitting surface, determining said overall image on the basis of the captured digital cells, determining whether the emitting surface has a homogeneous luminance or a non-homogeneous luminance on the basis of the luminances of the pixels of said overall image.

This object is achieved by the present invention as it relates to a method for performing the photometric control of an emitting surface of an automotive light, the method comprises: providing an image acquisition device, selectively capturing, by means of said image acquisition device, a plurality of digital image cells comprising respective pixels, wherein said captured digital cells are dimensioned so that the pixels contained therein have an acquisition angle smaller than a predetermined angular threshold measured with respect to a viewing axis of said image acquisition device, and wherein said digital cells are dimensioned so that their composition/union forms an overall image which represents said emitting surface, determining said overall image on the basis of the captured digital cells, determining whether the emitting surface has a homogeneous luminance or a non-homogeneous luminance on the basis of the luminances of the pixels of said overall image.

The independent and dependent claims describe preferred embodiments of the present invention and form an integral part of the present description.

BRIEF DESCRIPTION OF THE DRAWINGS

The present invention will now be described with reference to the attached drawings, which illustrate a non-limiting example of embodiment, wherein:

Figure 1 schematically shows a system for the photometric control of an emitting surface of an automotive lighting unit, made according to the dictates of the present invention,

Figure 2 schematically shows a plurality of images, one of which is enlarged for clarity, which are acquired by the system during the photometric control of the emitting surface of the automotive lighting unit, according to the present invention,

Figure 3 is a schematic view of the system shown in Figure 1 during a movement of an image acquisition device,

Figure 4 is a graph showing a curve of the luminances of the pixels of the image cells that make up the overall image of the emitting surface of a automotive lighting unit,

Figure 5 is a perspective view with parts in section and parts removed for clarity of an example of an automotive lighting unit having an emitting surface,

Figure 6 schematically shows a light moving system and a removing station comprised in the system made according to the dictates of the present invention,

Figure 7 is a flowchart of the operations implemented by the method for the photometric control of an emitting surface of an automotive lighting unit, provided according to the present invention,
Figures 8 and 9 show as many schematic views of the digital cell acquisition operation during the implementation of the method object of the present invention,
Figures 10 to 12 show as many schematic views of the luminance of a digital cell and of the respective angular thresholds.

BEST MODE FOR CARRYING OUT THE INVENTION

The present invention will now be described in detail with reference to the attached figures to allow one skilled in the art to produce it and use it. Various modifications to the embodiments described will be immediately evident to those skilled in the art and the generic principles described can be applied to other embodiments and applications without departing from the scope of the present invention, as defined in the attached claims. Therefore, the present invention should not be considered limited to the embodiments described and illustrated, but should be accorded the broadest scope in accordance with the principles and characteristics described and claimed herein.

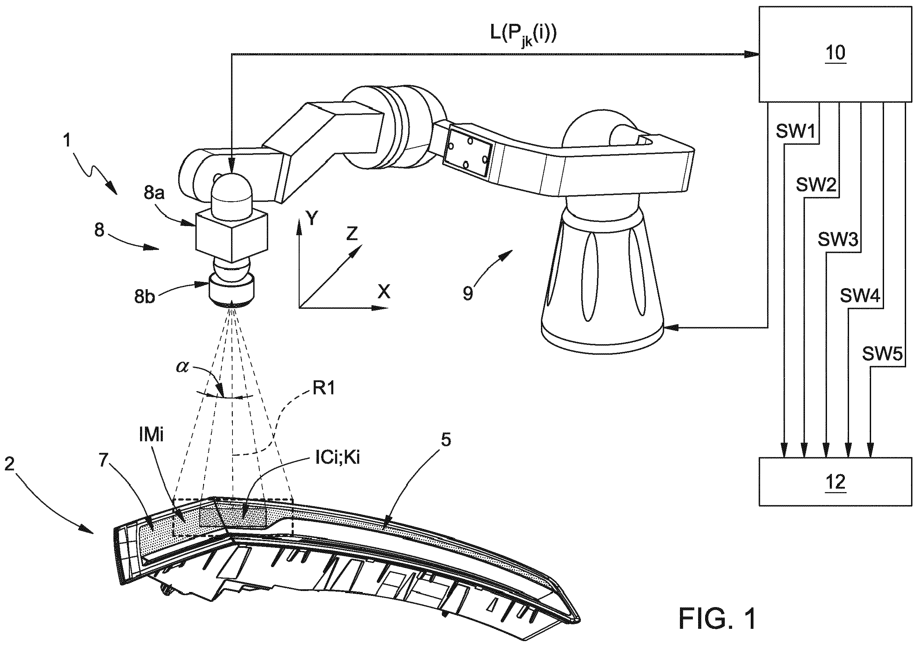

With reference to Figure 1, number 1 schematically illustrates a system for the photometric control of an illuminating surface or emitting surface 7, of an automotive lighting unit 2.

According to a preferred embodiment of the present invention, the system 1 implements a luminance photometric control of the emitting surface 7 of the automotive lighting unit 2.

According to a preferred embodiment of the present invention, the automotive lighting unit 2 can be, for example, a rear light of the motor-vehicle. However, it is understood that the present invention is not limited to a rear light of a motor-vehicle (car, truck, van, or the like) but can be applied in addition or alternatively to a front head light of the motor-vehicle.

It should also be noted that in the following disclosure, the term automotive lighting unit 2 means a lighting device/appliance that is designed to be incorporated into a vehicle, in the front or in the back rear, and is designed to perform one or more of the following functions: illuminating the area surrounding the vehicle, signalling the presence, signalling the position, signalling the direction of movement of the motor-vehicle.

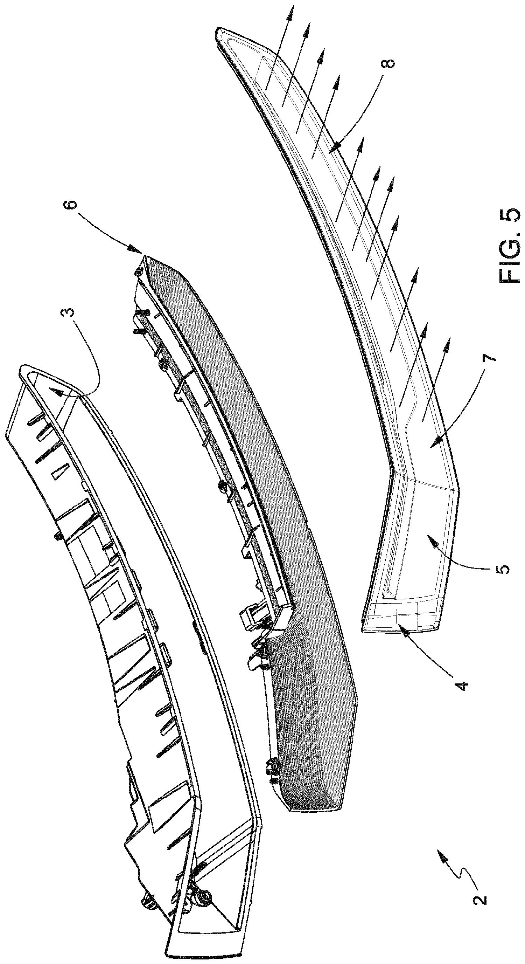

With reference to a possible exemplary embodiment shown in Figure 5, the automotive lighting unit 2 can comprise at least: a substantially tub-shaped rear hull 3, which is structured so as to be stably embedded in a specially made compartment in the body (for example in the rear or front portion) of the vehicle (not illustrated); a front half-shell 4, which is placed to close the mouth of the rear hull 3 so as to preferably slightly protrude outside the vehicle body, and is provided with at least a transparent or semi-transparent portion 5; and at least one lighting unit or device 6 (an electronic circuit provided with light sources, for example LEDs or similar OLEDs), which is arranged inside the rear hull 3 and is designed to generate light so as to back-light the transparent or semi-transparent portion 5 of the front half-shell 4.

In the schematic example shown in Figures 1, 2, 3 and 5, the transparent or semi-transparent portion 5 comprises an approximately lenticular body having at least a first predetermined area AR1. The transparent or semi-transparent portion 5 has an internal surface (not illustrated) illuminated (back-lit) by the light generated by the lighting device 6, and an external surface opposite to the internal surface which constitutes/forms, in use (i.e., when the lighting device 6 is on and emits light), the aforementioned illuminating surface or emitting surface 7.

It is understood that in the following disclosure, the term emitting surface 7 means an illuminating surface of the automotive lighting unit 2, that is, capable of emitting light (illuminating) towards the space outside the vehicle (Figure 5).

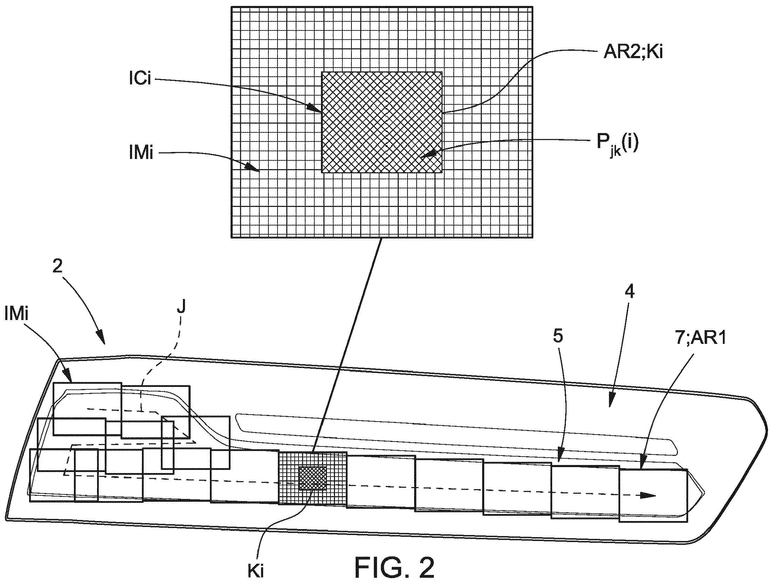

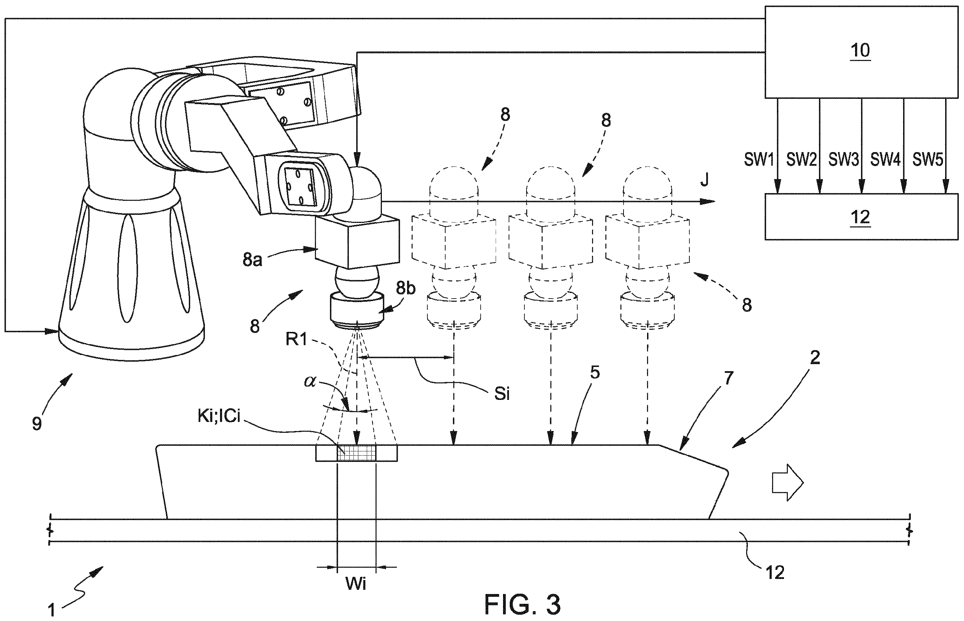

According to the preferred embodiment shown in Figures 1 and 3, the system 1 comprises an image acquisition device 8, an electronic unit 10. According to a preferred embodiment illustrated in Figures 1 and 2, the system 1 also preferably comprises a handling device 9.

According to the exemplary embodiment shown in Figures 1 and 3, the handling device 9 can comprise, for example, a robotic arm mechanically connected to the image acquisition device 8 to move the same. The robotic arm can comprise an electronic system or circuit (not illustrated), which receives as input electrical control signals indicative of a required movement (to be carried out) and controls the movement of the robotic arm to move the image acquisition device 8 in space, based on the received control signals. The movement performed by the robotic arm can be controlled relative to one or more axes. In the example illustrated in Figure 1, the movement of the robotic arm can be controlled along/relative to the three axes X, Y, and Z, shown in Figure 1, orthogonal one to the other (multi-axis movement).

However, it is understood that the present invention is not limited to a system 1 comprising a handling device 9 provided with a robotic arm, but can provide any mechanical handling system of a known type capable of moving the image acquisition device 8 based on the electrical control data/signals.

It is also understood that the present invention is not limited to the use of a handling device 9 which moves, under control, the image acquisition device 8 with respect to the automotive lighting unit 2 (for example stationary), but can provide, alternatively or in addition, that the handling device 9 moves the automotive lighting unit 2 with respect to the image acquisition device 8 (for example stationary) relative to one or more axes (X, Y and Z).

With reference to Figures 1, 2, 3 and 8, the image acquisition device 8 is configured so as to selectively acquire and/or capture at least one image IMi of the emitting surface 7 (wherein i is an index, hereinafter referred to as variable index between 1 and N). The image IMi is captured/processed in a digital format (for example by means of an electronic image sensor not illustrated, matrix-like, linear or the like, comprised in the image acquisition device 8) and comprises a plurality of pixels.

As shown in Figures 1,3 and 8, the image IMi contains at least one cell ICi which represents in the form of an image a respective portion Ki of the emitting surface 7. The portion Ki of the emitting surface 7 represented by the image cell ICi (digital image) is dimensioned so as to have a second area AR2 smaller than the first area AR1 of the overall emitting surface 7.

As shown in Figures 2, 8, 10-12, the cell ICi is dimensioned so that its pixels $P_{jk}(i)$ (where j and k are the indices of the pixel matrix of the cell ICi) have respective acquisition angles $\delta jk$, measured relative to an observation/vision axis R1 of the image acquisition device 8, smaller than a predetermined angular threshold. In other words, the cell ICi is composed by the digital image of a part of the emitting surface 7 composed by the portion Ki and is formed by the pixels $P_{jk}(i)$ of the image IMi having acquisition angles $\delta jk$ smaller than the predetermined angular threshold $\alpha$.

The image acquisition device 8 is configured so as to acquire the image IMi and provide the cell ICi (digital image) from the acquired image IMi.

According to a convenient embodiment shown in Figures 1 and 3, the image acquisition device 8 can comprise a digital camera 8a (camera or video camera) and preferably a photopic filter 8b. The photopic filter 8b can be optically coupled to the optical unit (lens) of the digital camera 8a. Preferably, the digital camera 8a can conveniently be monochromatic (black and white/gray scale) or in colour.

The camera 8a can be configured to implement calculation algorithms that process the image IMi of the image sensor to provide at output electrical data/signals containing the cell ICi (digital image). For this purpose, the digital camera 8a can comprise an electronic processing device, for example, a circuit provided with at least one microprocessor, configured to process the image IMi acquired by the sensor to provide at output the cell ICi (digital image).

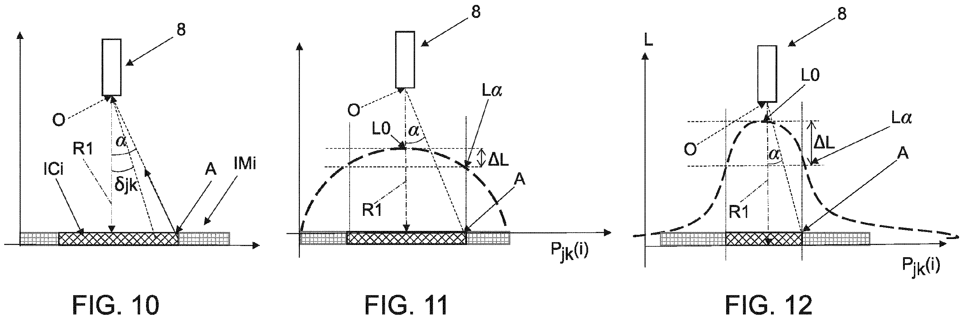

Figure 10 schematically shows a cell ICi contained in the image IMi acquired by the camera 8a wherein R1 represents the observation or viewing axis preferably corresponding to the optical axis of the camera 8a of the image acquisition device 8, $\delta jk$ is the acquisition angle of a pixel $P_{jk}(i)$ measured with respect to the optical axis R1, "A" is a point associated with the perimeter pixel $P_{jk}(i)$ of the cell ICi observed from the point "O" of the image acquisition device 8 and having an acquisition angle $\delta jk$ (relative to axis R1) corresponding to the predetermined angular threshold $\alpha$ ($\delta jk= \alpha$).

It is understood that a variation of the angular threshold $\alpha$ entails a corresponding regulation of the two dimensions of the cell ICi. The angular threshold $\alpha$ can therefore be defined and/or modified on the basis of some technical elements that characterize the emitting surface 7, such as its shape and/or the geometric distribution of its luminance with respect to the observation axis, optical axis R1 in Figure 10. The predetermined angular threshold $\alpha$ that defines the dimensions of the cell ICi can be determined in addition and/or alternatively on the basis of a percentage error $\in$ indicative of a tolerance expected in the evaluation (measurement) of the luminance L relative to the observation axis R1 of the image acquisition device 8.

Figures 11 and 12 show two schematic examples of the luminance observed/detected by the image acquisition device in two different illuminating surfaces 7, wherein the angular thresholds $\alpha$ are different.

For example, the angular threshold $\alpha$ can be defined (e.g., during the system setting step) on the basis of the following relationship:

a)

$$\delta jk \leq \propto \quad |\frac{\Delta L}{L0} = \frac{|L(\propto)-L0|}{L0} <= \in$$

Wherein:

$\delta jk$ denotes the observation angle of the pixel Pjk defining the cell ICi by way of the image acquisition device 8,

$L(\alpha)$ is the luminance of the pixel $P_{jk}(i)$ of the cell ICi that intersects the direction OA (Figures 10-12),

L0 is the luminance of the pixel $P_{jk}(i)$ of the cell ICi that intersects the direction OH (Figures 10-12),

$\in$ is the indicative percentage error of the tolerance in the evaluation (determination) of the luminances $L(\alpha)$ of the pixels of the cell ICi with respect to the observation axis R1.

The mathematical relationship a) indicates that it is possible to establish a percentage error $\in$ on the basis of a tolerance and calculate the predetermined angular threshold $\alpha$ as a function of the latter, thus defining the dimensions of the cells ICi captured by system 1.

It is understood that the present invention is not limited to the use of a camera 8a with a photopic filter 8b but may provide for the use of other electronic devices.

For example, according to an embodiment, the image acquisition device 8 can alternatively comprise a luminance camera or a luminance meter or a goniophotometer or any other similar image acquisition device, which is configured so as to measure the luminance $L(P_{jk}(i))$ of the pixels $P_{jk}(i)$ by processing the image of the acquired cell ICi. In this case, the luminance camera or luminance meter or goniophotometer can be configured so as to be provided with electronic devices that process the digital image so as to: acquire the image IMi, obtain the cell ICi from the image IMi, determine/measure the luminances $L(P_{jk}(i))$ of the pixels $P_{jk}(i)$ of the cell ICi, and provide, to the electronic unit 10, the luminances $L(P_{jk}(i))$ of the pixels of the cell ICi itself. The operation of a luminance camera and/or a goniophotometer and/or a luminance meter for determining the luminances of the pixels of a digital image of a surface are known and consequently will not be further described.

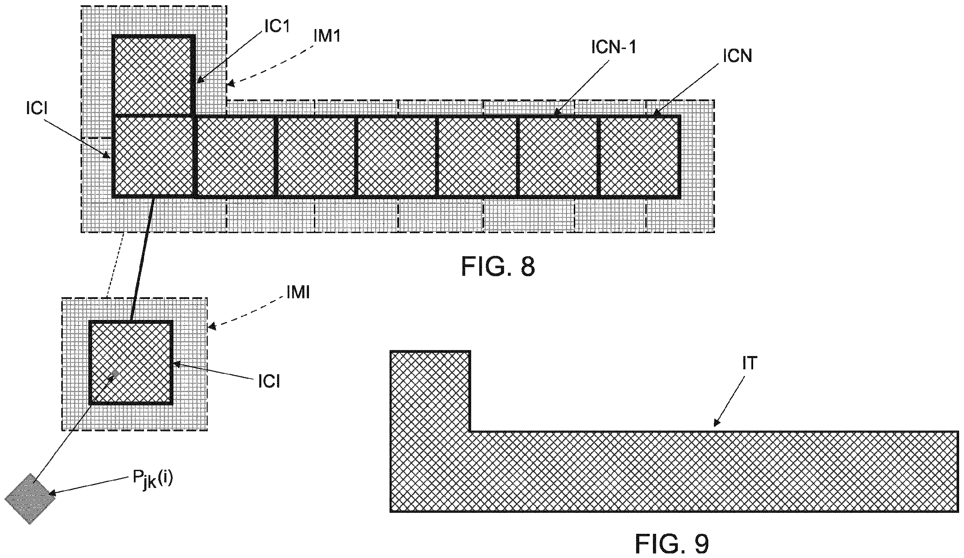

With reference to the embodiment shown in Figures 1, 2 and 3, the electronic unit 10 is configured so as to control, by means of the handling device 9, the movement of the image acquisition device 8 with respect to the automotive lighting unit 2, along a predetermined advancement path J. The advancement path J can be associated with a sequential acquisition of a plurality of cells ICi which represent the respective surface portions Ki that make up the emitting surface 7 (Figures 8 and 9).

It is also understood that the present invention is not limited to the movement of the image acquisition device 8 with respect to the automotive lighting unit 2 (for example stationary) along the predetermined advancement path J, but can alternatively provide for the control of the movement of the automotive lighting unit 2 with respect to the image acquisition device 8 (for example stationary) along the advancement path J itself.

As shown in the schematic example of Figures 2 and 8, the emitting surface 7 is then divided into a plurality of surface portions Ki which are represented in the form of images by the respective cells ICi. The cells ICi determined by the image acquisition device 8 at the end of the movement along the advancement path J, form a mosaic of images which, when composed/combined (Figure 9) form an overall image IT which represents the emitting surface 7.

In other words, the overall image IT represents the composition (union/mosaic) of the cells ICi. Therefore, the sum of the second areas AR2 of the cells ICi corresponds to the first area AR1 of the emitting surface 7. The advancement path J is therefore defined so that the image acquisition device 8 scans the entire emitting surface 7 according to a predetermined sequential and ordered acquisition order of the cells ICi in which the definition conditions of the cells ICi are maintained, which provide that the pixels $P_{jk}(i)$ contained in the cells ICi have acquisition angles $\delta jk$ smaller than the predetermined angular threshold $\alpha$.

Preferably, the movement of the image acquisition device 8 along the advancement path J can be carried out on one or more axes, for example three axes X, Y and Z. Preferably, the movement of the image acquisition device 8 along the advancement path J can be of the discontinuous type, i.e., providing for the temporary interruption of the movement of the image acquisition device 8 to carry out the acquisition of the image IMi.

With reference to Figures 2 and 3, in this embodiment, the movement of the image acquisition device 8 along the advancement path J can be controlled so that the length Si travelled by the image acquisition device 8 between the acquisition of an image IMi and the acquisition of an immediately subsequent image IMi+1 depends on the predetermined angular threshold $\alpha$. Conveniently, the length Si can correspond approximately to a dimension Wi of the portion Ki of the emitting surface corresponding to the cell ICi. The dimension Wi depends on the predetermined angular threshold $\alpha$. It is understood that the images IMi may comprise pixels $P_{jk}(i)$ in common while each cell ICi is dimensioned to preferably comprise pixels $P_{jk}(i)$ not comprised in an adjacent cell ICi+1. In this case the electronic unit 10 can be configured to eliminate the overlapping of the pixels $P_{jk}(i)$ in the acquired images IMi.

With reference to the embodiment shown in Figure 1, the electronic unit 10 can also be configured so as to control the image acquisition device 8 during its movement along the path J, so that the image acquisition device 8 captures selectively the images IMi containing the cells ICi, and determines the ICi contained in the acquired images IMi. In other words, during the movement, the electronic unit 10 can receive the cells ICi from the image acquisition device 8, and process them to determine for each cell ICi, for example, a matrix of values containing the luminances $L(P_{jk}(i))$ of the pixels $P_{jk}(i)$ of said cell ICi.

It is understood that, according to an alternative embodiment, the electronic unit 10 can receive from the image acquisition device 8, matrixes of values containing the luminances $L(P_{jk}(i))$ of the pixels $P_{jk}(i)$ of the acquired/captured cells ICi.

According to a preferred embodiment, the electronic unit 10 can also be configured so as to compose the acquired cells ICi according to the respective positions so as to obtain the overall image IT.

According to a preferred embodiment, the electronic unit 10 can also be configured so as to process the pixels $P_{jk}(i)$ of the overall image IT obtained from the cells ICi to determine the luminances $L(P_{jk}(i))$ of the pixels $P_{jk}(i)$ of the overall image IT itself.

According to a preferred embodiment in which the image acquisition device 8 comprises a digital camera 8a (in black and white or in colour), the electronic unit 10 can be configured so as to receive and process the signals (in grayscale or in colour) provided by the camera 8a, by means of a calibration system, and performs a conversion and linearization operation in luminance $(Cd/m^2)$ of the optical signal acquired by each pixel, taking into account the exposure parameters and the optical properties of the vision system of the camera 8a. It is understood that in this case the output of the digital camera 8a can comprise a matrix of values corresponding to the light signal transduced by each of its pixels, whose value is digital and can conveniently have a resolution of 8 or 16 bit.

It is understood that according to an alternative embodiment in which the image acquisition device 8 supplies the electronic unit 10 with matrices of values con-

taining the luminances $L(P_{jk}(i))$ of the pixels $P_{jk}(i)$ of the acquired/captured cells ICi, the electronic unit 10 can compose the matrices of the cells ICi to obtain the luminances $L(P_{jk}(i))$ of the pixels $P_{jk}(i)$ of the overall image IT.

The electronic unit 10 is also configured so as to perform a photometric control of the emitting surface 7 on the basis of the luminances $L(P_{jk}(i))$ of the pixels $P_{jk}(i)$ of the overall image IT depicting the emitting surface 7.

According to a preferred embodiment, the photometric control implemented by the electronic unit 10 provides for determining whether the emitting surface 7 has a homogeneous luminance.

According to a possible embodiment, the electronic unit 10 determines that the emitting surface 7 has a homogeneous luminance when the luminances $L(P_{jk}(i))$ of the pixels $P_{jk}(i)$ of the cells ICi that compose the overall image IT satisfy a first predetermined condition.

According to a possible embodiment, the electronic unit 10 determines that the luminances $L(P_{jk}(i))$ of the pixels $P_{jk}(i)$ of the cells ICi that compose the overall image IT satisfy the first predetermined condition when the luminances $L(P_{jk}(i))$ of the pixels $P_{jk}(i)$ are comprised within a predetermined luminance range.

Conversely, the electronic unit 10 determines that the emitting surface 7 has a non-homogeneous luminance when the luminances $L(P_{jk}(i))$ of the pixels $P_{jk}(i)$ of the cells ICi that compose the overall image IT do not satisfy the first predetermined condition.

According to a possible embodiment, the electronic unit 10 determines that the luminances $L(P_{jk}(i))$ of the pixels $P_{jk}(i)$ of the cells ICi that compose the overall image IT do not satisfy the first predetermined condition when the luminances $L(P_{jk}(i))$ of said pixels $P_{jk}(i)$ are not comprised within a predetermined luminance range.

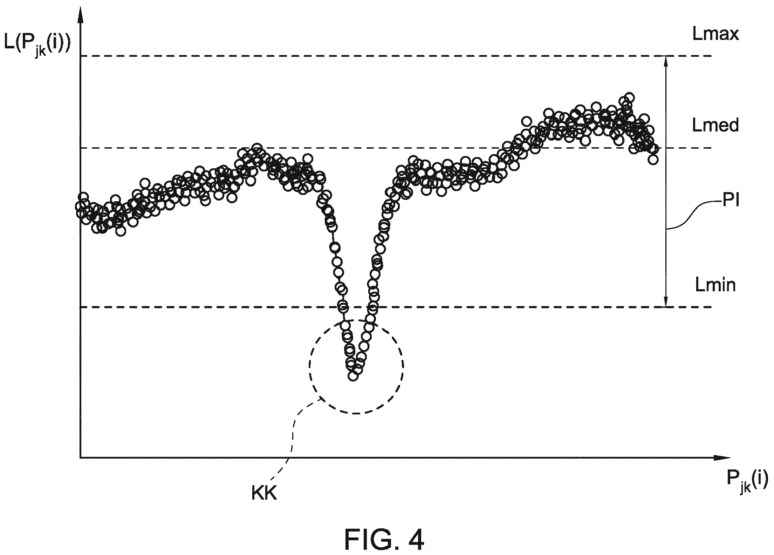

Figure 4 shows a graph of an example obtained by the Applicant during laboratory tests. The graph represents: on the X axis the pixels $P_{jk}(i)$ of the overall image IT obtained from the cells ICi; on the Y axis the luminances $L(P_{jk}(i))$ of the pixels $P_{jk}(i)$ of the overall image IT. The graph also shows a range of luminances PI between a minimum luminance value Lmin and a maximum luminance value Lmax. In the graph, the dotted line circle KK contains some luminances $L(P_{jk}(i))$ of pixels $P_{jk}(i)$ of the overall image IT which are lower than the minimum luminance value Lmin, i.e., outside the range PI. In the example shown in Figure 4, the system 1 determines that the emitting surface 7 does not have a homogeneous luminance because some luminances $L(P_{jk}(i))$ of the pixels $P_{jk}(i)$ of the overall image IT do not satisfy the first predetermined condition, since they are not comprised within the range PI.

A technical effect obtained by the system 1 is that of being able to control the luminance of the automotive light 2 even when its emitting surface 7 has large dimensions and/or keeping the image acquisition device from the emitting surface 7 at a close distance from the automotive lighting unit 2.

It should be pointed out that the luminance of the automotive lighting unit 2 is defined as the ratio between the luminous intensity emitted by the emitting surface 7 in a given predetermined direction, which in the case of the camera approximately corresponds to that of its observation axis R1.

The pixels $P_{jk}$ provided immediately around the optical axis R1 have reduced acquisition angles δjk and are therefore associated with an approximately common direction of observation, consistent with a correct procedure for determining the luminance. However, as the distance of the image pixels from the optical axis R1 of the camera 8a increases, the acquisition angle of the same increases, which introduces an error.

The Applicant has found that in order to be able to determine with a given degree of reliability and precision the luminances of the pixels that form the image of the emitting surface with large dimensions, it is therefore possible to break-up the emitting surface 7 into a mosaic of cells ICi, to selectively acquire the cells ICi, preferably by moving the image acquisition device, re-compose the mosaic of cells ICi so as to obtain the overall image IT corresponding to the emitting surface 7 and determine the luminances $L(P_{jk}(i))$ of the pixels $P_{jk}(i)$ of the overall image IT.

Due to this, the system 1 can be applied to control/determine the luminance of the light along a production line even when the emitting surface has a large dimension and the distance of the image acquisition device from the emitting surface is very small.

A technical effect obtained thanks to this application is therefore that of being able to automate the control/determination of luminance on lights along a production line. This effect solves both the technical problem originating from the subjectivity of the analysis carried out by an operator, and the technical problem of the only partial control carried out by the systems that provide for the analysis of the luminance on some samples of lights in the laboratory. It should also be pointed out that in a laboratory there is no limitation on the positioning distance of the camera 8a from the automotive lighting unit 2 as is instead present in an application of the camera 8a along a production line.

Preferably, the electronic unit 10 is also configured so as to provide information SW1 indicative of the homogeneous luminance of the emitting surface 7, and/or information SW2 indicative of the non-homogeneous luminance of the emitting surface 7.

Preferably, the electronic unit 10 is also configured so as to determine (recognize) the pixels $P_{jk}(i)$ of the cells ICi that make up the image IT that do not meet the first predetermined condition. The electronic unit 10 can conveniently provide information SW3 indicative of the surface portions Ki of the emitting surface 7 with non-homogeneous luminance, i.e., containing the pixels $P_{jk}(i)$ that do not meet the first predetermined condition.

The technical effect obtained is that of being able to determine in detail the parts/portions (even very small) of the automotive lighting unit 2 that could have defects. In other words, the technical effect obtained is to provide indications for each automotive light 2 that allow the potential defects of the same to be directly detected with precision.

It is understood that according to an alternative embodiment the electronic unit 10 can be configured to determine a luminance value indicative of the overall luminance of the emitting surface 7 on the basis of the luminances $L(P_{jk}(i))$ of the pixels $P_{jk}(i)$ of the cells ICi which make up the image IT, i.e., the luminances $L(P_{jk}(i))$ of the pixels $P_{jk}(i)$ of the image IT.

According to said alternative embodiment the electronic unit 10 can determine the condition of luminance homogeneity on the basis of the luminance value. Preferably, according to said alternative embodiment, the luminance value of the emitting surface 7 may correspond to an average value calculated on the basis of the (arithmetic) average of the luminances $L(P_{jk}(i))$ of the pixels $P_{jk}(i)$ present in the overall image IT.

In this case, the electronic unit 10 may determine that the luminances $L(P_{jk}(i))$ of the pixels $P_{jk}(i)$ of the cells ICi composing the overall image IT satisfy the first predetermined condition when the aforementioned luminance value of the emitting surface 7 is greater than or equal to a predetermined homogeneous luminance threshold. In this case, the electronic unit 10 determines that the emitting surface 7 has a homogeneous luminance.

Conversely, the electronic unit 10 may determine that the luminances L (Pjk (i)) of the pixels Pjk (i) of the cells ICi composing the overall image IT do not satisfy the first predetermined condition, when the aforementioned luminance value of the emitting surface 7 is lower than the predetermined homogeneous luminance threshold. In this case, the electronic unit 10 determines that the emitting surface 7 has a non-homogeneous luminance.

According to a preferred embodiment, the electronic unit 10 may be conveniently configured so as to determine a defective state of a automotive lighting unit 2 when it detects that the emitting surface 7 has a non-homogeneous luminance.

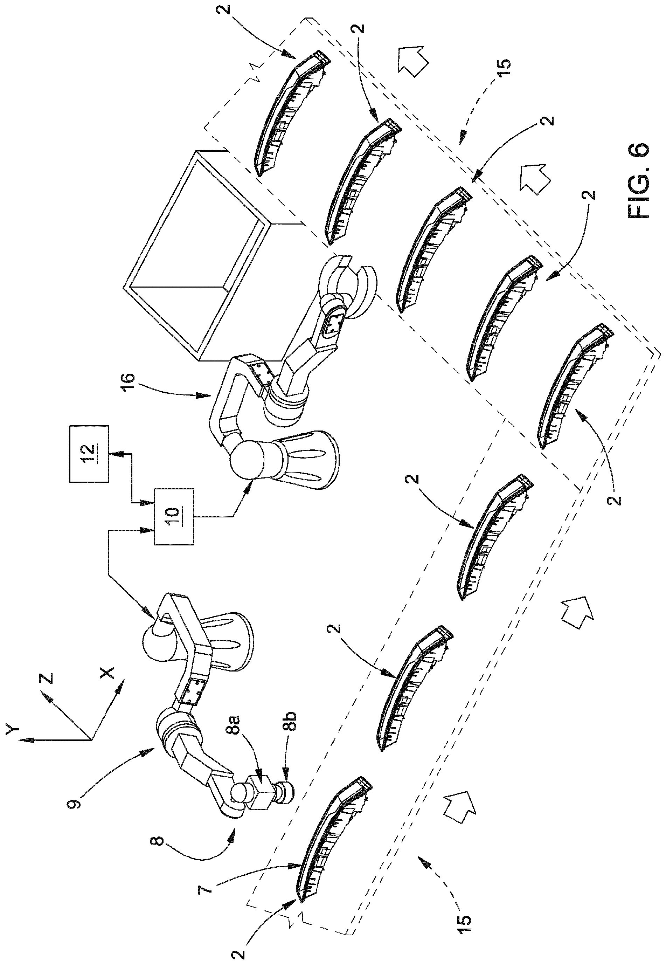

With reference to Figure 6, the system 1 may comprise a moving system 15 comprising for example an advancement line (or a section of line) provided with at least one conveyor designed to move the automotive lighting units 2 along a predetermined movement path between an inlet and an outlet. The system 1 may further comprise a removing station 16 provided, for example, with a robotic arm. The robotic arm can be provided with a gripping member, designed to selectively remove, upon command, one or more automotive lighting units 2 provided/loaded in the moving system 15. The electronic unit 10 may be configured to control the removing station 16 so as to selectively remove from the moving system 15 the automotive lighting units 2 for which a defective state and/or a non-homogeneous luminance has been detected, during the luminance/homogeneity control.

The technical effect obtained is to completely automatically separate the automotive lights 2 with a non-homogeneous luminance and therefore considered defective from the line.

With reference to Figures 1 and 6, the system 1 can preferably comprise a user interface device 12 designed to communicate to the user (visually and/or vocally) the first information SW1 and/or second information SW2 and/or third information SW3.

Conveniently, the electronic unit 10 may also be configured so as to perform a photometric control based on the determination of the luminous intensity ILL of the emitting surface 7.

The electronic unit 10 may also be configured so as to determine the luminous intensity ILL of the emitting surface 7 of the automotive lighting unit 2 on the basis of the luminances $L(P_{jk}(i))$ of the pixels $P_{jk}(i)$ of the overall image IT.

According to a possible embodiment, the overall luminous intensity ILL of the emitting surface 7 may be determined, for example, by means of the following integral function:

$$ILL = \int L(Pjk(i))$$

Wherein $L(P_{jk}(i))$ are the luminances of the pixels $P_{jk}(i)$ of the i-th cell ICi.

In other words, the luminous intensity ILL of the emitting surface 7 is calculated by integrating the luminances $L(P_{jk}(i))$ of the pixels $P_{jk}(i)$ of the cells ICi composing the overall image IT representing the emitting surface 7.

Alternatively and/or additionally, the overall luminous intensity ILL of the emitting surface 7 may be determined in other ways, for example by means of the following summation function:

$$ILL = \sum_{i=1}^{i=n} L(Pjk(i))$$

Wherein i is the index that identifies the cells ICi while j and k are the indexes of the pixels $P_{jk}(i)$ present in the respective cell ICi.

Conveniently, the electronic unit 10 may also be configured so as to determine whether the luminous intensity ILL of the emitting surface 7 satisfies, or vice versa, does not satisfy a second predetermined condition. The second predetermined condition may be met when the luminous intensity ILL is greater than or equal to a predetermined luminous intensity threshold. Conversely, the second predetermined condition may not be satisfied when the luminous intensity ILL is lower than the predetermined luminous intensity threshold.

Conveniently, the electronic unit 10 may also be configured so as to determine a state of non-compliance of the automotive lighting unit 2 when the luminous intensity ILL does not meet the second predetermined condition.

Conveniently, the electronic unit 10 may also be configured so as to control the removing station 16 to selectively remove a automotive lighting unit 2 from the moving system 15 when it has a luminous intensity ILL which does not satisfy the second predetermined condition, i.e., it is in a state of non-compliance.

The technical effect obtained is that of being able to carry out an automatic check-up of the correct functioning of the automotive lighting unit 2 directly on the production line. In other words, the technical effect obtained is that of carrying out an automatic control of the correctness of the luminous intensity of the automotive lighting unit 2 along the production line so as to detect automotive lighting units 2 which are in a state of non-compliance.

Conveniently, the electronic unit 10 may also be configured to provide information SW4 indicative of the luminous intensity ILL of the emitting surface 7 of the automotive lighting unit 2. The information SW4 may be provided to the user via the user interface device 12.

Conveniently, the electronic unit 10 may also be configured to provide information SW5 indicative of the fact that the luminous intensity ILL of a automotive lighting unit 2 satisfies or does not satisfy the second predetermined condition. The information SW5 can be provided to the user via the user interface device 12.

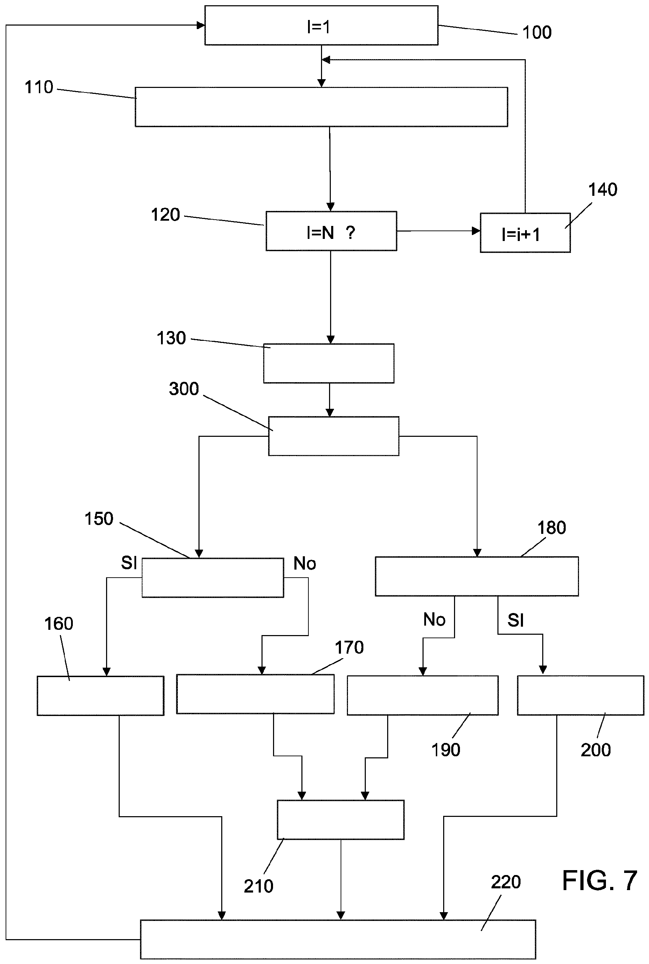

With reference to Figure 7 the steps of the method for the photometric control of the emitting surface 7 will be described in the following, according to a possible embodiment in which it is assumed that the camera 8a acquires and provides at output the cells ICi.

To increase clarity of explanation, the method applied to the analysis of a single automotive lighting unit 2 will be considered. It is understood that the operations described in the following can be repeated in the same way for a plurality of automotive lighting units 2. During the analysis, the automotive lighting units 2 can be moved, e.g., advanced, by the moving system 15 in a given direction through the removing station 16.

The method can provide, for example, the step of initializing an index i=1 (block 100) relating to the acquisition of the image IMi (i=1) containing the cell ICi (e.g., i=1), of moving the image acquisition device 8 with respect to the automotive lighting unit 2 in the position associated with the image IMi and the respective cell ICi, and to selectively acquire/capture the image IMi when the image acquisition device 8 has reached the image acquisition position IMi and cell ICi (block 110). In this step, the image acquisition device 8 can provide at output the cell ICi captured in digital form.

The method also comprises the step of verifying whether the index i corresponds to the index N associated with the last cell ICi to be acquired along the path j (Block 120).

In the negative case, that is, if "i" does not correspond to N, the method can, for example, increase the index i by one unit and implement again the operations envisaged in blocks 110-120 to selectively acquire the subsequent cells ICi up to completion of the complete scanning of the emitting surface 7. In other words, the aforementioned operations can be repeated so as to ensure that system 1 determines all the cells ICi that make up/form the overall image IT and are defined on the basis of the breaking-up of the emitting surface 7 according to the predetermined angular threshold $\alpha$.

In the positive case, that is, if "i" corresponds to N, the method determines that the acquisition (scan) of the cells ICi has been completed.

The method determines the overall image IT on the basis of the captured cells ICi (block 130). In this step the cells ICi can be composed/joined on the basis of their acquisition sequence and/or the movement imparted to the image acquisition device by the handling device 9.

The method determines the luminances $L(P_{jk}(i))$ of the pixels $P_{jk}(i)$ of the overall image IT corresponding to the emitting surface 7 (block 300).

Preferably, following the determination of the luminances $L(P_{jk}(i))$ of the pixels $P_{jk}(i)$ of all the cells ICi forming the image IT, the method can determine (check) whether the luminances $L(P_{jk}(i))$ satisfy the first predetermined condition (Block 150). If the first predetermined condition is satisfied (output YES block 150), the method determines that the emitting surface 7 has a homogeneous luminance (block 160). If, on the other hand, the first predetermined condition is not satisfied (output NO block 150), the method determines that the emitting surface 7 has a non-homogeneous luminance (block 170). In this case, that is, when the method determines that the emitting surface 7 has a non-homogeneous luminance, the method can determine the defective state of the automotive lighting unit 2.

Preferably, the method can further comprise the step of determining the luminous intensity ILL of the emitting surface 7 on the basis of the luminances $L(P_{jk}(i))$ of the pixels $P_{jk}(i)$ of the cells ICi which form the overall image IT (block 180).

For example, the method can check whether the luminous intensity ILL of the emitting surface 7 satisfies the second predetermined condition, i.e., check whether the luminous intensity ILL is greater than or equal to a predetermined luminous intensity threshold.

In the positive case (exit YES from block 180), that is, if the luminous intensity ILL of the emitting surface 7 satisfies the second predetermined condition, the method detects that the automotive lighting unit 2 is compliant (block 200). If not (output NO from block 180), that is, if the luminous intensity ILL of the emitting surface 7 does not meet the second predetermined condition, the method determines that the automotive lighting unit 2 is in the state of non-compliance (block 190).

The method can also comprise the step of controlling the removing device 16 to remove the automotive lighting unit 2 from the movement line (block 210) when the defective state (block 170) and/or the non-compliance state (block 190) is detected.

Following the operations performed in blocks 160, 210, 200, the method can wait for a subsequent automotive lighting unit 2 (block 220) and automatically perform the operations described above (blocks 100 to 220).

The advantages of the system described above are the following.

The determination of the luminance can also be carried out with the camera at a limited distance from the emitting surface. Furthermore, it is possible to determine the luminance on illuminating surfaces of large lights ensuring a predetermined viewing or observation angle.

The determination of the homogeneity and non-homogeneity conditions of the luminance allow to automate the process of separating defective lights present in a line. The determination of the luminous intensity can also be carried out on lights with large illuminating surfaces and allows the automatic removal of the lights from the production line when they are not compliant.

It is clear that modifications and variations can be made to the system and method described and illustrated herein which do not depart from the scope defined by the claims.

**Claims**

1. A system (1) for the photometric control of an emitting surface (7) of an automotive lighting unit (2), said system is **characterized in that** it comprises:

   an image acquisition device (8), an electronic unit (10) configured to:

   - selectively capture, by means of said image acquisition device (8), a plurality of digital image cells (ICi) comprising respective pixels ($P_{jk}(i)$),

     wherein said captured digital cells (ICi) are dimensioned so that the pixels ($P_{jk}(i)$) contained therein have an acquisition angle ($\delta jk$) lower than a predetermined angular threshold ($\alpha$) measured with respect to a viewing axis (R1) of said image acquisition device (8), and wherein said digital cells (ICi) are dimensioned so that their composition/union forms an overall image (IT) which represents said emitting surface (7),

   - determine said overall image (IT) on the basis of the captured digital cells (ICi),
   - determine whether the emitting surface (7) has a homogeneous luminance or a non-homogeneous luminance on the basis of the luminances of the pixels ($L(P_{jk}(i))$) of said overall image (IT).

2. The system according to claim 1, wherein said electronic unit (10) is further configured so as to determine the luminances of the pixels ($L(P_{jk}(i))$) of said overall image (IT) on the basis of the luminances ($L(P_{jk}(i))$) of the pixels ($P_{jk}(i)$) of said captured digital cells (ICi).

3. The system according to claim 2, wherein said electronic unit (10) is further configured so as to process the pixels ($P_{jk}(i)$) of each said captured digital cell (ICi) to determine the luminances ($L(P_{jk}(i))$) of said pixels ($P_{jk}(i)$).

4. The system according to claim 2, wherein said image acquisition device (8) is configured so as to provide the luminances of the pixels ($P_{jk}(i)$) of each captured digital cell (ICi) to said electronic unit (10).

5. The system according to claim 1, wherein said electronic unit (10) is configured so as to compose the overall image (IT) on the basis of the union/composition of said digital cells (ICi), and process the pixels ($P_{jk}(i)$) of said overall image (IT) to determine the luminances ($L(P_{jk}(i))$) of the pixels ($P_{jk}(i)$) of said overall image (IT).

6. The system according to any one of the preceding claims, comprising:

   a handling device (9) configured so as to move the image acquisition device (8) and/or said automotive lighting unit (2) one with respect to the other, said electronic unit (10) is also configured so as to control said handling device (9) to selectively capture, during movement, said digital cells (ICi) of said emitting surface (7) by means of said image acquisition device (8).

7. The system according to claim 6, wherein:

   said automotive lighting unit (2) comprises: at least one transparent or semi-transparent portion (5) having a first area, at least one lighting device (6) which emits light for backlighting said transparent or semi-transparent portion (5) so as to form said emitting surface (7) on said first area,

said image acquisition device (8) is configured so as to: capture a first image (IMi) of said emitting surface (7) containing a digital cell (ICi) corresponding to a respective surface portion (Ki) of said emitting surface (7) having a second area smaller than the first area, and providing the luminances ($L(P_{jk}(i))$) of the pixels ($P_{jk}(i)$) comprised in said cell (ICi),

said electronic unit (10) is also configured so as to:

> move, by means of the handling device (9), the image acquisition device (8) and/or said automotive lighting unit (2), one with respect to the other, along a predetermined advancement path (J) associated with the sequential acquisition of a plurality of digital cells (ICi), which represent respective surface portions (Ki) of said emitting surface (7),
> control the image acquisition device (8), during said movement along said predetermined advancement path (J), so as to receive the captured digital cells (ICi) from the image acquisition device (8),
> compose/join said digital cells (ICi) to obtain the overall image (IT),
> process the pixels ($P_{jk}(i)$) of said overall image (IT) to determine the luminances ($L(P_{jk}(i))$) of the pixels of the overall image (IT) itself,
> determine whether the emitting surface (7) has a homogeneous luminance or a non-homogeneous luminance on the basis of the luminances of the pixels ($L(P_{jk}(i))$) of the overall image (IT).

8. The system according to any one of the preceding claims, wherein said electronic unit (10) is further configured so as to determine that the emitting surface (7) has a homogeneous luminance when the luminances ($L(P_{jk}(i))$) of the pixels ($P_{jk}(i)$) of said overall image (IT) satisfy a first predetermined condition.

9. The system according to claim 8, wherein said first predetermined condition is satisfied when the luminance ($L(P_{jk}(i))$) of one or more pixels ($P_{jk}(i)$) of said overall image (IT) is comprised within a predetermined luminance range (PI).

10. The system according to any one of the preceding claims, wherein said electronic unit (10) is further configured so as to determine a luminance value indicative of the luminance of the emitting surface (7) on the basis of the luminances ($L(P_{jk}(i))$) of the pixels ($P_{jk}(i)$) of said overall image (IT).

11. The system according to claim 10, wherein said electronic unit (10) is configured so as to determine that the emitting surface (7) has a homogeneous luminance on the basis of said luminance value.

12. The system according to any one of the preceding claims, wherein said electronic unit (10) is further configured so as to determine a defective state of the emitting surface (7) of a automotive lighting unit (2) on the basis of the luminances of the pixels ($L(P_{jk}(i))$) of said overall image (IT).

13. The system according to claim 12, wherein said electronic unit (10) is further configured so as to determine defective portions of the emitting surface (7) on the basis of the luminances of the pixels ($L(P_{jk}(i))$) of said overall image (IT).

14. The system according to any one of the preceding claims, comprising a removing device (16) designed to selectively remove the automotive lighting unit (2) which has an emitting surface (7) having a non-homogeneous luminance.

15. A method to carry out the photometric control of an emitting surface (7) of an automotive lighting unit (2),

> said method is **characterized in that** it comprises:

> > - arranging an image acquisition device (8),
> > - selectively capturing, by means of said image acquisition device (8), a plurality of digital image cells (ICi) comprising respective pixels ($P_{jk}(i)$),

> wherein said captured digital cells (ICi) are dimensioned so that the pixels ($P_{jk}(i)$) contained therein have an acquisition angle ($\delta jk$) smaller than a predetermined angular threshold ($\alpha$) measured with respect to a viewing axis (R1) of said image acquisition device (8), and
> wherein said digital cells (ICi) are dimensioned so that their composition/union forms an overall image (IT) which represents said emitting surface (7),

> > - determining said overall image (IT) on the basis of the captured digital cells (ICi),
> > - determining whether the emitting surface (7) has a homogeneous luminance or a non-homogeneous luminance on the basis of the luminances of the pixels ($L(P_{jk}(i))$) of said overall image (IT).

FIG. 1

EP 4 113 077 A1

FIG. 2

EP 4 113 077 A1

FIG. 3

FIG. 4

EP 4 113 077 A1

FIG. 5

FIG. 6

FIG. 7

FIG. 8

FIG. 9

FIG. 10

FIG. 11

FIG. 12

Europäisches Patentamt

European Patent Office

Office européen des brevets

# EUROPEAN SEARCH REPORT

Application Number

**EP 21 18 2947**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CATTOEN M ET AL: "Compact System for Photometric Characterization of Automotive Headlamps", INSTRUMENTATION AND MEASUREMENT TECHNOLOGY CONFERENCE, 2005. IMTC 2005 . PROCEEDINGS OF THE IEEE OTTAWA, ON, CANADA 16-19 MAY 2005, PISCATAWAY, NJ, USA,IEEE, vol. 3, 16 May 2005 (2005-05-16), pages 1669-1674, XP010900735, DOI: 10.1109/IMTC.2005.1604453 ISBN: 978-0-7803-8879-6 * page 1669, right-hand column, paragraph 1 – page 1670, right-hand column, last paragraph * * figures 1-3,10,12 * ----- | 1-15 | INV. G01J1/04 G01J1/42 G01M11/02 |

| TECHNICAL FIELDS SEARCHED (IPC) |
|---|
| G01J G01M |

The present search report has been drawn up for all claims

| Place of search | Date of completion of the search | Examiner |
|---|---|---|
| Munich | 15 December 2021 | Jacquin, Jérôme |